# EUROPEAN PATENT APPLICATION

(11) **EP 4 825 671 A1**
(43) Date of publication of application: **21.10.2026**
(21) Application number: 24902315.1
(22) Date of filing: 08.10.2024
(51) Int. Cl.: B60R 22/26

(54) **BUCKLE ASSEMBLY AND SEAT BELT BUCKLE**

(30) Priority: 12.12.2023 CN 202311711164
(71) Applicant: Autoliv Development AB, 44783 Vargarda (SE)
(72) Inventor: GAO, Jian, Shanghai 201807 (CN); LI, Yingying, Shanghai 201807 (CN); ZHU, Juan, Shanghai 201807 (CN); WANG, Jiachen, Shanghai 201807 (CN); LIN, Guoping, Shanghai 201807 (CN); GE, Liang, Shanghai 201807 (CN); LI, Mingyang, Shanghai 201807 (CN)
(74) Representative: Müller Verweyen
(86) International application number: PCT/CN2024/123427
(87) International publication number: WO 2025/123889

(57) **Abstract**

The present disclosure relates to a buckle assembly and a seat belt buckle. The buckle assembly includes: a buckle, including a first housing; a load limiting module, including a second housing; a connecting wire, connected between the buckle and the load limiting module, the buckle being flexibly connected to the load limiting module through the connecting wire; and a fixing component, sleeved on the outside of the connecting wire between the buckle and the load limiting module, where in an extension direction of the connecting wire, the fixing component includes a first end and a second end, the first end overlaps and abuts against the first housing, and the second end overlaps and abuts against the second housing, to limit rotation of the fixing component relative to the buckle and the load limiting module. The fixing component controls bending positions, torsion angles, and swing directions of the connecting wire, thereby achieving a high number of fatigue cycles and meeting requirements for different angles and positions of the buckle.

## Description

### TECHNICAL FIELD

The present invention relates to the technical field of vehicle safety, and in particular to, a buckle assembly and a seat belt buckle.

### BACKGROUND ART

Seat belts for vehicles may also be referred to as seat safety belts and are a type of occupant restraint apparatus. A seat belt restrains an occupant seated on a seat through webbing pulled out from a seat belt retractor and through engagement between a locking tongue at a free end of the webbing and a buckle assembly fixed to the seat. The seat belt is configured to protect the occupant by securing the occupant to the seat in the event of a vehicle collision or the like, thereby preventing secondary collisions between the occupant and components such as the steering wheel and the dashboard during the collision, or preventing death or injury caused by the occupant being thrown out of the vehicle during the collision.

In the related art, the buckle assembly fixed to the seat generally includes a buckle and a load limiting module. The load limiting module is flexibly connected to the buckle via a connecting wire. That is, the buckle can be twisted, bent, and swung relative to the load limiting module via the connecting wire.

However, the connecting wire having such a flexible structure cannot maintain the buckle at a fixed torsion angle and bending angle (also referred to as a swing angle) relative to the load limiting module, and the bending position of the connecting wire cannot be controlled. Particularly, when the length of the connecting wire between the buckle and the load limiting module is short, and the buckle is twisted, bent, and swung relative to the load limiting module for a long period of time, the fatigue performance of the shorter connecting wire under bending is relatively poor, and the number of bending cycles to failure is also lower than that of a longer connecting wire. As a result, the connecting wire having the flexible structure is prone to long-term mutual friction with the load limiting module or the buckle, thereby easily causing wear and fracture of the connecting wire.

### SUMMARY OF THE INVENTION

To overcome the problems existing in the related art, the present disclosure provides a buckle assembly and a seat belt buckle.

According to a first aspect of the embodiments of the present disclosure, the present disclosure provides a buckle assembly. The buckle assembly comprises: a buckle, including a first housing; a load limiting module, including a second housing; a connecting wire, connected between the buckle and the load limiting module, the buckle being flexibly connected to the load limiting module through the connecting wire; and a fixing component, sleeved on the outside of the connecting wire between the buckle and the load limiting module, where in an extension direction of the connecting wire, the fixing component comprises a first end and a second end, the first end overlaps and abuts against the first housing, and the second end overlaps and abuts against the second housing, to limit rotation of the fixing component relative to the buckle and the load limiting module.

In some embodiments, the fixing component comprises a first guide hole and a second guide hole that are through holes; and two free ends of the connecting wire respectively extend into the first guide hole and the second guide hole from the first end of the fixing component, the connecting wire forms a U-shaped fixed end at the first end of the fixing component, and the fixed end is fixedly connected to the first housing via a fastener, where the first end of the fixing component is provided with a protrusion, and the protrusion is inserted into the first housing and abuts against the fastener.

In some embodiments, the protrusion is located between the first guide hole and the second guide hole, and an abutting surface of the protrusion abutting against the fastener is arc-shaped, to fit an outer wall of the fastener.

In some embodiments, the second end of the fixing component is provided with an insertion portion, and the insertion portion is inserted into the second housing, to isolate the connecting wire from the second housing, so that the connecting wire does not abut against the second housing.

In some embodiments, the fixing component is further provided with limiting stop plates, the limiting stop plates are located on two sides of the insertion portion, and after the insertion portion is inserted into the second housing, the limiting stop plates abut against the second housing, to limit a position of the fixing component in the extension direction of the connecting wire.

In some embodiments, the first guide hole and the second guide hole are disposed in an intersecting manner, so that the connecting wire in the first guide hole and the second guide hole is arranged in a crossed and twisted configuration.

In some embodiments, the fixing component is a component that has a fixed shape and that is made of a hard material or a soft material.

In some embodiments, the first end of the fixing component is wrapped on the outside of the first housing, and the second end of the fixing component is wrapped on the outside of the second housing.

In some embodiments, the fixing component is made of a soft material, and the soft material is wound around an outer wall of the connecting wire to form the fixing component.

According to a second aspect of the embodiments of the present disclosure, the present disclosure provides a seat belt buckle. The seat belt buckle comprises: a locking tongue; and the buckle assembly according to the first aspect, where the locking tongue is engaged in the buckle of the buckle assembly, to fix a seat belt to a seat.

The technical solutions provided in the embodiments of the present disclosure may achieve the following beneficial effects: In the present disclosure, the fixing component is configured to be used when the length of the connecting wire between the buckle and the load limiting module is short. The fixing component is sleeved on the outside of the connecting wire having a flexible structure. By restricting the torsion angle and swing direction of the connecting wire, the torsion angle and swing direction of the buckle relative to the load limiting module are restricted, so as to adapt to a habitual position of a user when buckling the locking tongue, and meet various requirements for different angles and positions of the buckle at the seat in different vehicles, thereby improving the adaptability and reliability of the buckle assembly.

In addition, the fixing component can further control the bending position of the connecting wire, so as to achieve a high number of fatigue cycles. The fixing component can further isolate the connecting wire from both the load limiting module and the buckle so that the connecting wire does not abut against the load limiting module or the buckle, thereby avoiding long-term wear between the connecting wire and the buckle and the load limiting module, prolonging the service life of the connecting wire, and further improving the reliability of the buckle assembly.

### BRIEF DESCRIPTION OF THE DRAWINGS

The accompanying drawings, which are incorporated into and constitute a part of the present specification, illustrate embodiments consistent with the present disclosure, and are used to explain the principles of the present disclosure together with the specification.
FIG. 1 is a schematic perspective view of a buckle assembly without a fixing component installed, according to a first exemplary embodiment;
FIG. 2 is a schematic perspective view of a buckle assembly with a fixing component installed, according to the first exemplary embodiment;
FIG. 3 is a schematic exploded perspective view of the buckle assembly shown in FIG. 2;
FIG. 4 is a schematic view of the fixing component in FIG. 3 from a first viewing angle;
FIG. 5 is a schematic view of the fixing component in FIG. 3 from a second viewing angle;
FIG. 6 is a cross-sectional view of the fixing component in FIG. 3;
FIG. 7 is a cross-sectional view of the fixing component in FIG. 3 sleeved on the outside of a connecting wire;
FIG. 8 is a schematic exploded view of a fixing component and a load limiting module;
FIG. 9 is a schematic structural view of the fixing component and the load limiting module in FIG. 8 after assembly;
FIG. 10 is a schematic view of a buckle assembly and a fixing component in a disassembled state according to a second exemplary embodiment; and
FIG. 11 is a schematic perspective view of the buckle assembly and the fixing component in FIG. 10 after assembly.

### DETAILED DESCRIPTION OF PREFERRED EMBODIMENTS

Exemplary embodiments are described in detail herein, and examples of the exemplary embodiments are presented in the accompanying drawings. When the following description refers to the accompanying drawings, unless otherwise specified, the same numerals in different accompanying drawings represent the same or similar elements. The implementations described in the following exemplary embodiments are not representative of all implementations consistent with the present disclosure. Instead, the implementations are merely examples of apparatuses and methods consistent with some aspects of the present disclosure as recited in the appended claims.

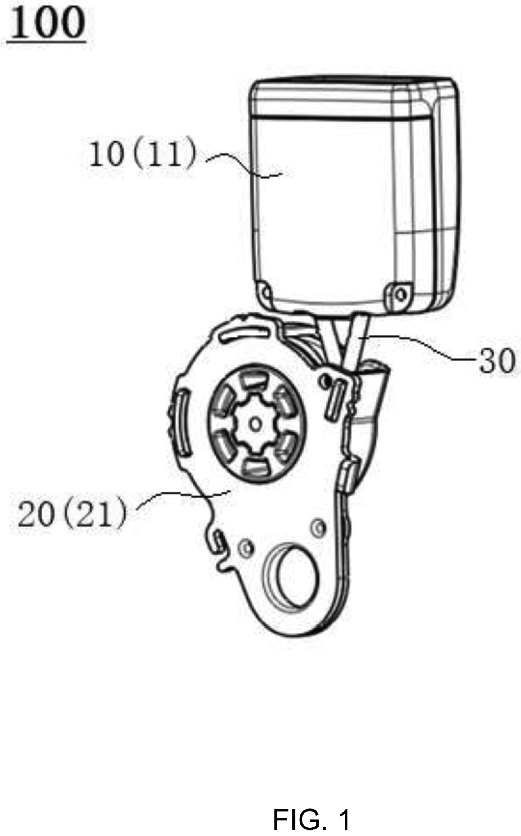

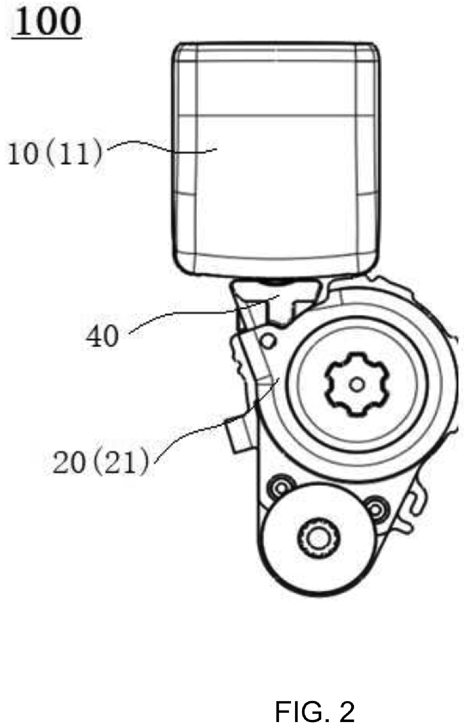

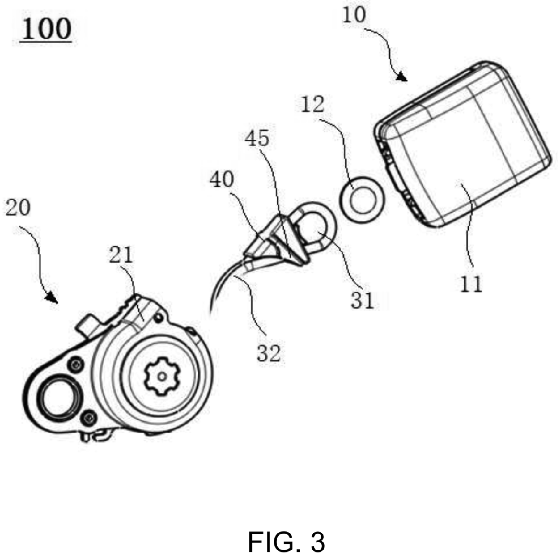

To resolve the above technical problems, the present disclosure provides a buckle assembly 100. As shown in FIG. 1 and FIG. 2, the buckle assembly 100 includes a buckle 10, a load limiting module 20, and a connecting wire 30 flexibly connected between the buckle 10 and the load limiting module 20. Because the connecting wire 30 is made of a flexible material, for example, a steel wire rope, the buckle 10 can be flexibly connected to the load limiting module 20 via the connecting wire 30. As shown in FIG. 2 and FIG. 3, in the buckle assembly 100, a fixing component 40 is further disposed between the buckle 10 and the load limiting module 20, and the fixing component 40 is sleeved on the outside of the connecting wire 30 that is exposed outside the buckle 10 and the load limiting module 20.

As shown in FIG. 1 and FIG. 3, the buckle 10 includes a first housing 11, and the load limiting module 20 includes a second housing 21. In an extension direction of the connecting wire 30, the fixing component 40 includes a first end 41 and a second end 42. The first end 41 overlaps and abuts against the first housing 11, and the second end 42 overlaps and abuts against the second housing 21, to limit rotation of the fixing component 40 relative to the buckle 10 and the load limiting module 20.

Specifically, as shown in FIG. 1, a position at which the connecting wire 30 is connected to the buckle 10 is usually located inside the first housing 11. Similarly, a position at which the connecting wire 30 is connected to the load limiting module 20 is usually located inside the second housing 21. Therefore, an end of each of the first housing 11 and the second housing 21 close to the fixing component 40 is usually provided with a hole through which the connecting wire 30 extends.

The first end 41 of the fixing component 40 is an end facing the buckle 10, and the second end 42 of the fixing component 40 is an end facing the load limiting module 20.

In this embodiment, the first end 41 of the fixing component 40 may abut against the first housing 11, and further, as shown in FIG. 3, the first end 41 of the fixing component 40 may also extend into the hole of the first housing 11. Meanwhile, the second end 42 of the fixing component 40 may also extend into the hole of the second housing 21. Therefore, the first end 41 of the fixing component 40 overlaps and abuts against the first housing 11, so that the first end 41 of the fixing component 40 is not rotatable about a rotation axis relative to the first housing 11. Meanwhile, the second end 42 of the fixing component 40 overlaps and abuts against the second housing 21, so that the second end 42 of the fixing component 40 is not rotatable about the rotation axis relative to the second housing 21. The direction of the rotation axis is the extension direction of the connecting wire 30.

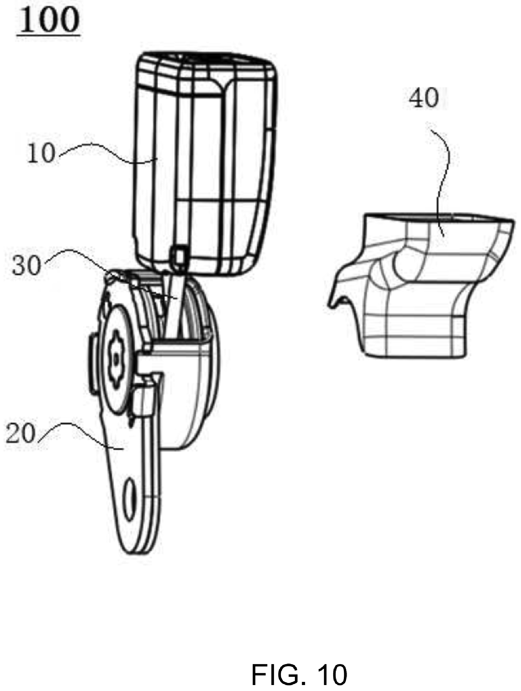

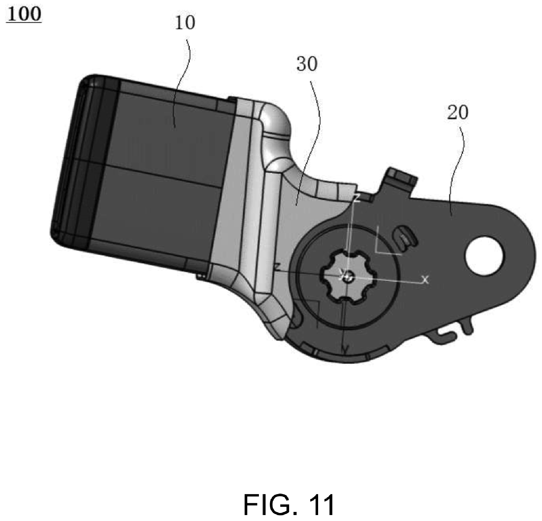

In a second embodiment, as shown in FIG. 10 and FIG. 11, the first end 41 of the fixing component 40 may also be sleeved or wrapped on the outside of the first housing 11 to overlap and abut against the first housing 11, and the second end 42 of the fixing component 40 may also be sleeved or wrapped on the outside of the second housing 21 to overlap and abut against the second housing 21, so that neither of the first end 41 and the second end 42 of the fixing component 40 is rotatable about the rotation axis relative to the first housing 11 and the second housing 21.

In addition, when the length of the connecting wire 30 between the buckle 10 and the load limiting module 20 is short, the fixing component 40 is sleeved on the outside of the connecting wire 30, and the fixing component 40 may be integrally made of a soft material. Therefore, when the buckle 10 swings relative to the load limiting module 20, the fixing component 40 may be appropriately bent. However, the bending amplitude of the fixing component 40 is smaller than that of the steel wire rope, thereby restricting the bending amplitude and swinging amplitude of the buckle 10 relative to the load limiting module 20.

In addition, the fixing component 40 may further control the bending position (also referred to as a bending point) of the connecting wire 30, so as to achieve a high number of fatigue cycles. For example, by adjusting the thickness or thinness of an outer wall of the fixing component 40, the bending position of the connecting wire 30 can be changed, where narrower regions or thinner regions may serve as bending positions. The bending position of the connecting wire 30 may alternatively be changed by configuring the flexibility of the fixing component 40. For example, the fixing component 40 may be formed by combining two materials of different flexibilities, and the position of the softer material may be configured as the bending position.

In addition, the number of bending positions may be configured based on the length of the connecting wire 30 between the buckle 10 and the load limiting module 20. When the connecting wire 30 between the buckle 10 and the load limiting module 20 is short, one bending position may be provided. When the connecting wire 30 between the buckle 10 and the load limiting module 20 is long, two or more bending positions may be provided. No specific limitations are placed herein.

In the first embodiment, the first end 41 and the second end 42 of the fixing component 40 are respectively inserted into the first housing 11 and the second housing 21. Therefore, the connecting wire 30 is isolated from both the buckle 10 and the load limiting module 20 and does not abut against the buckle 10 and the load limiting module 20, thereby avoiding long-term mutual wear between the connecting wire 30 and both the first housing 11 of the buckle 10 and the second housing 21 of the load limiting module 20, prolonging the service lives of the connecting wire 30, the first housing 11, and the second housing 21, and further improving the reliability of the buckle assembly 100.

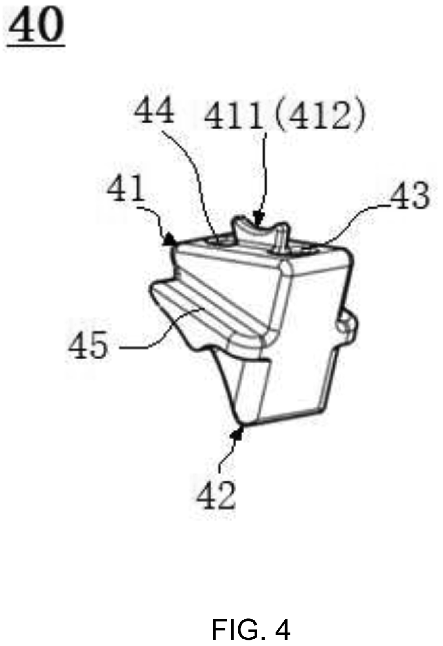

In the first embodiment, as shown in FIG. 4 to FIG. 7, the fixing component 40 is a structure having a fixed or specific shape. The fixing component 40 includes a first guide hole 43 and a second guide hole 44 that are through holes.

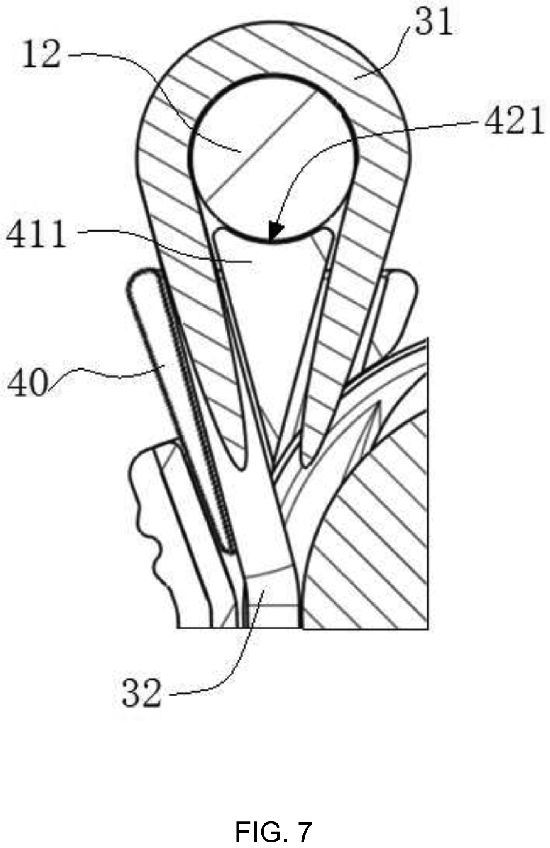

Generally, the connecting wire 30 connecting the buckle 10 and the load limiting module 20 is made of one steel wire rope. The connecting material made of the one steel wire rope has only two free ends, and the two free ends respectively extend into the first guide hole 43 and the second guide hole 44 from the first end 41 of the fixing component 40, and extend out of the second end 42 of the fixing component 40. Therefore, as shown in FIG. 3 and FIG. 7, the connecting wire 30 forms a U-shaped fixed end 31 at the first end 41 of the fixing component 40, and the fixed end 31 is fixedly connected to the first housing 11 of the buckle 10 via a fastener 12.

Further, in this embodiment, the first guide hole 43 and the second guide hole 44 are disposed in an intersecting manner, so that the connecting wire 30 in the first guide hole 43 and in the second guide hole 44 is arranged in a crossed and twisted configuration.

As shown in FIG. 3, the U-shaped fixed end 31 of the connecting wire 30 located at the first end 41 of the fixing component 40 may form a first plane. The two free ends of the connecting wire 30 respectively extend out of the first guide hole 43 and the second guide hole 44 from the second end 42 of the fixing component 40 to form two parallel connecting wires 30. A plane in which the two parallel connecting wires 30 are located is defined as a second plane, and the second plane is close to the second housing 21 of the load limiting module 20.

It can be learned from FIG. 3 that the connecting wire 30 is twisted after passing through the first guide hole 43 and the second guide hole 44 of the fixing component 40, such that the U-shaped fixed end 31 and the free ends connected to each other are respectively located in two planes, that is, the first plane and the second plane, thereby changing a swing direction of the buckle 10 relative to the load limiting module 20.

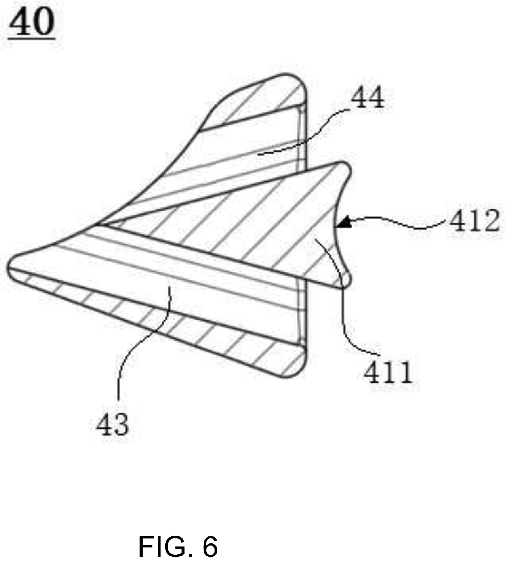

As shown in FIG. 6 and FIG. 7, because the first guide hole 43 and the second guide hole 44 are two independent guide holes, the extension direction of the connecting wire 30 in the fixing component 40 is also fixed. That is, an intersection angle between the first plane in which the U-shaped fixed end 31 of the connecting wire 30, which is exposed outside the fixing component 40, is located and the second plane in which the free end is located is fixed.

Further, an intersection angle and a torsion angle between the first guide hole 43 and the second guide hole 44 of the fixing component 40 determine the intersection angle between the first plane in which the U-shaped fixed end 31 is located and the second plane in which the free end is located, and thus determine the swing direction of the buckle 10 relative to the load limiting module 20. Therefore, the intersection angle and the torsion angle between the first guide hole 43 and the second guide hole 44 are changed so as to adapt to a habitual position of a user when buckling the locking tongue and to meet various requirements for different angles and positions of the buckle 10 at the seat in different vehicles, thereby improving the adaptability and reliability of the buckle assembly 100.

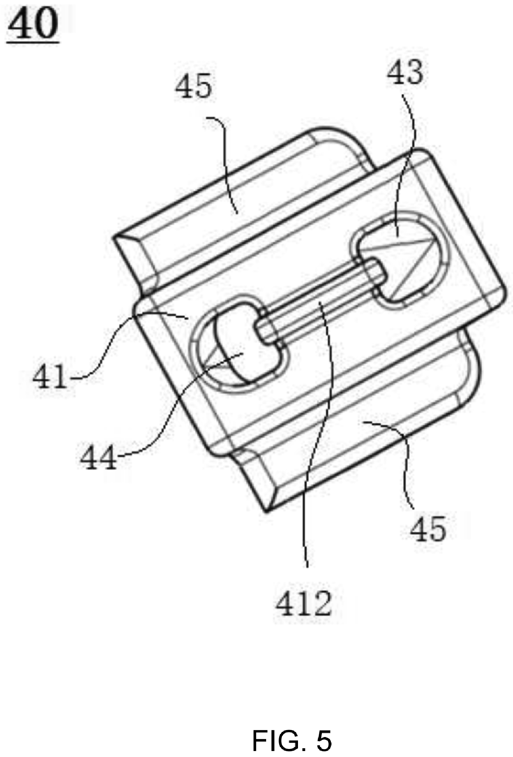

Further, as shown in FIG. 4 to FIG. 7, the first end 41 of the fixing component 40 is provided with a protrusion 411, and the protrusion 411 of the fixing component 40 is inserted into the first housing 11 and abuts against the fastener 12 (as shown in FIG. 7). In this embodiment, as shown in FIG. 5, the protrusion 411 is located between the first guide hole 43 and the second guide hole 44. In some other embodiments, the protrusion 411 may alternatively be disposed on two sides of the first guide hole 43 or the second guide hole 44, and a plurality of protrusions 411 may be provided. No specific limitations are placed herein.

The protrusion 411 can avoid relative rotation between the first housing 11 of the buckle 10 and the fixing component 40, and also largely avoid bending and wear of the connecting wire 30 at the first end 41 of the fixing component 40 and the first housing 11 of the buckle 10, thereby prolonging the service life of the fixing component 40 and the buckle 10.

In the first embodiment, the thickness and width of the protrusion 411 may both be smaller than the thickness of the fixing component 40. With such a structure, the protrusion 411 allows the first end 41 of the fixing component 40 to be not entirely inserted into the first housing 11 of the buckle 10, thereby reducing the material costs of the fixing component 40. Moreover, the size of the opening of the first housing 11 of the buckle 10 can be reduced, thereby avoiding reduction in the strength of the first housing 11 of the buckle 10 caused by an excessively large opening.

When the protrusion 411 is inserted into the first housing 11 of the buckle 10, as shown in FIG. 2 of this embodiment, the first end 41 of the fixing component 40 may abut against the first housing 11, so as to prevent, as much as possible, the connecting material from being exposed to the outside, and to prevent external dust, gravel, water, and other residues from entering the fixing component 40, the first housing 11 of the buckle 10, or the second housing 21 of the load limiting module 20, thereby prolonging the service life of the entire buckle assembly 100.

Further, an abutting surface 412 of the protrusion 411 in contact with the fastener 12 matches the shape of the fastener 12. For example, as shown in FIG. 7 of this embodiment, the abutting surface 412 of the protrusion 411 abutting against the fastener 12 is arc-shaped.

It should be noted that the arc-shaped abutting surface 412 of the protrusion 411 in this embodiment is only exemplary, and is not intended to limit the scope of protection of the present disclosure. In some other embodiments, the abutting surface 412 of the protrusion 411 may be of any shape, provided that the shape matches an outer wall of the fastener 12. For example, when the fastener 12 is a hexagon bolt, the abutting surface 412 of the protrusion 411 may be trapezoidal.

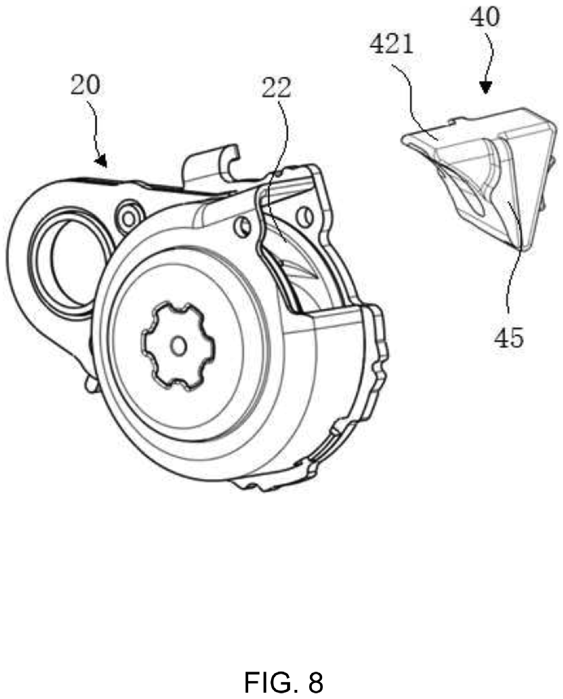

In the first embodiment, as shown in FIG. 8, the second end 42 of the fixing component 40 is further provided with an insertion portion 421. As shown in FIG. 7, correspondingly, the second housing 21 further includes an insertion hole 22 for receiving the insertion portion 421. The insertion portion 421 is inserted into the second housing 21, and the insertion portion 421 is in a clearance fit with the insertion hole 22. The insertion portion 421 and the insertion hole 22 can be fixed as required, which is not specifically limited herein.

By inserting the insertion portion 421 into the second housing 21 of the load limiting module 20, the connecting wire 30 cannot be bent between the fixing component 40 and the second housing 21. Further, the connecting wire 30 can be isolated from the second housing 21, so that the connecting wire 30 does not abut against the second housing 21, thereby avoiding mutual wear between the connecting wire 30 and the second housing 21, and prolonging the service lives of the fixing component 40 and the second housing 21 of the load limiting module 20.

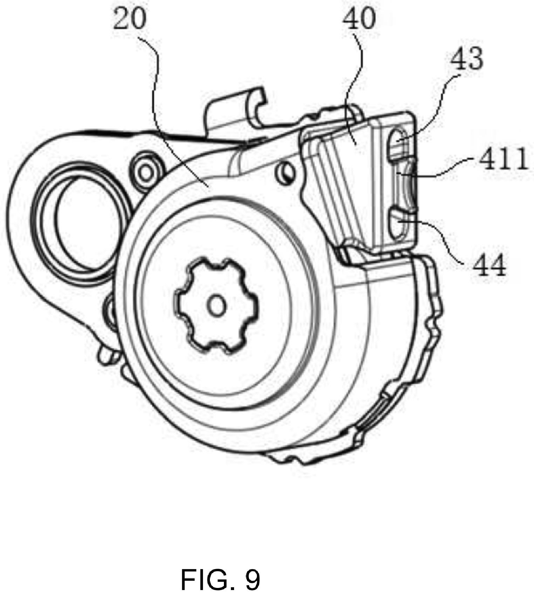

In some embodiments, as shown in FIG. 4, FIG. 5, FIG. 8 and FIG. 9, the fixing component 40 is further provided with limiting stop plates 45. The limiting stop plates 45 may be located on two sides of the insertion portion 421, and after the insertion portion 421 is inserted into the insertion hole 22 of the second housing 21, the limiting stop plates 45 abut against an outer wall of the second housing 21, to limit a position of the fixing component 40 in the extension direction of the connecting wire 30. This arrangement prevents the fixing component from excessively moving toward the second housing 21 of the load limiting module 20, thereby exposing the connecting wire 30 at the first end 41 of the fixing component 40 or separating the protrusion 411 at the first end 41 of the fixing component 40 from the first housing 11 of the buckle 10.

It can be learned from the foregoing description that the fixing component 40 may be made of a soft material, so that the fixing component 40 may also be bent to a certain extent when the buckle 10 swings. In some other embodiments, the fixing component 40 may also be made of a hard material, and due to the fixing component 40 being made of a hard material, the fixing component 40 cannot be bent. That is, once the fixing component 40 is sleeved on the outside of the connecting wire 30, the buckle 10 cannot be twisted or even swung relative to the load limiting module 20.

In the second embodiment, as shown in FIG. 10 and FIG. 11, the first end 41 and the second end 42 of the fixing component 40 are respectively wrapped on the outside of the first housing 11 and the second housing 21. In this embodiment, the fixing component 40 is made of a soft material, and the soft material can be wound around the outer wall of the connecting wire 30 to form the fixing component 40. This fixing component 40 formed by winding a soft material also allows the connecting wire 30 to be twisted and a torsion angle of the connecting wire 30 to be fixed, thereby changing a swing angle of the buckle 10 relative to the load limiting module 20.

Based on the same inventive concept, the present disclosure provides a seat belt buckle 10. The seat belt buckle 10 includes a locking tongue and the foregoing buckle assembly 100, where the buckle 10 is fixed on a vehicle seat. When a driver or a passenger is seated, a locking tongue with webbing is engaged in the buckle 10 of the buckle assembly 100, to fix a seat belt and the driver or the passenger on the seat to the seat.

The specifics of the functions implemented by the seat belt buckle 10 in the foregoing embodiment have been described in detail in the embodiment relating to the buckle assembly 100, and the details thereof are not described herein again.

It can be understood that in the present disclosure, "a plurality of" means two or more, and other quantifiers are similar. The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects. The singular forms "a" and "the" are also intended to include plural forms, unless otherwise specified in the context clearly.

It may be further understood that the terms "first", "second", and the like are used to describe various structures, but these structures should not be limited by these terms. These terms are only used to distinguish between structures of the same type, and do not indicate a particular order or degree of importance. In practice, the terms "first", "second", and the like are used interchangeably. For example, without departing from the scope of the present disclosure, a first structure may also be referred to as a second structure, and similarly, a second structure may also be referred to as a first structure.

It can be further understood that an orientation or positional relationship indicated by terms such as "center", "longitudinal", "lateral", "front", "back", "up", "down", "left", "right", "vertical", "horizontal", "top", "bottom", "inside", and "outside" is based on the orientation or positional relationship shown in the accompanying drawings, and is only for the convenience of describing the embodiments and simplifying the description, rather than indicating or implying that an apparatus or an element indicated must have a particular orientation, or be constructed and operated in a particular orientation.

A person skilled in the art can easily figure out other implementations of the present disclosure after thinking over the specification and practicing the invention disclosed herein. The present application is intended to cover any variations, uses, or adaptive changes of the present disclosure, and these variations, uses, or adaptive changes follow the general principles of the present disclosure and include common knowledge or conventional technical means in the technical field that are not disclosed in the present disclosure. The specification and the embodiments are to be regarded as exemplary only, and the actual scope and spirit of the present disclosure are pointed out by the following claims.

It should be understood that the present disclosure is not limited to the precise structures that have been described above and shown in the accompanying drawings, and various modifications and changes can be made without departing from the scope of the present disclosure. The scope of the present disclosure is limited by the appended claims only.

## Claims

1. A buckle assembly (100), **characterized by** comprising
a buckle (10), comprising a first housing (11);
a load limiting module (20), comprising a second housing (21);
a connecting wire (30), connected between the buckle (10) and the load limiting module (20), the buckle (10) being flexibly connected to the load limiting module (20) through the connecting wire (30); and
a fixing component (40), sleeved on the outside of the connecting wire (30) between the buckle (10) and the load limiting module (20),
wherein in an extension direction of the connecting wire (30), the fixing component (40) comprises a first end (41) and a second end (42), the first end (41) overlaps and abuts against the first housing (11), and the second end (42) overlaps and abuts against the second housing (21), to limit rotation of the fixing component (40) relative to the buckle (10) and the load limiting module (20).

2. The buckle assembly (100) according to claim 1, wherein
the fixing component (40) comprises a first guide hole (43) and a second guide hole (44) that are through holes; and
two free ends (32) of the connecting wire (30) respectively extend into the first guide hole (43) and the second guide hole (44) from the first end (41) of the fixing component (40), the connecting wire (30) forms a U-shaped fixed end (31) at the first end (41) of the fixing component (40), and the fixed end (31) is fixedly connected to the first housing (11) via a fastener (12),
wherein the first end (41) of the fixing component (40) is provided with a protrusion (411), and the protrusion (411) is inserted into the first housing (11) and abuts against the fastener (12).

3. The buckle assembly (100) according to claim 2, wherein
the protrusion (411) is located between the first guide hole (43) and the second guide hole (44), and an abutting surface (412) of the protrusion (411) abutting against the fastener (12) is arc-shaped, to fit an outer wall of the fastener (12).

4. The buckle assembly (100) according to claim 2, wherein
the second end (42) of the fixing component (40) is provided with an insertion portion (421), and the insertion portion (421) is inserted into the second housing (21), to isolate the connecting wire (30) from the second housing (21), so that the connecting wire (30) does not abut against the second housing (21).

5. The buckle assembly (100) according to claim 4, wherein
the fixing component (40) is further provided with limiting stop plates (45), the limiting stop plates (45) are located on two sides of the insertion portion (421), and after the insertion portion (421) is inserted into the second housing (21), the limiting stop plates (45) abut against the second housing (21), to limit a position of the fixing component (40) in the extension direction of the connecting wire (30).

6. The buckle assembly (100) according to claim 2, wherein
the first guide hole (43) and the second guide hole (44) are disposed in an intersecting manner, so that the connecting wire (30) in the first guide hole (43) and the second guide hole (44) is arranged in a crossed and twisted configuration.

7. The buckle assembly (100) according to any one of claims 1 to 6, wherein
the fixing component (40) is a component that has a fixed shape and that is made of a hard material or a soft material.

8. The buckle assembly (100) according to claim 1, wherein
the first end (41) of the fixing component (40) is wrapped on the outside of the first housing (11), and the second end (42) of the fixing component (40) is wrapped on the outside of the second housing (21).

9. The buckle assembly (100) according to claim 8, wherein
the fixing component (40) is made of a soft material, and the soft material is wound around an outer wall of the connecting wire (30) to form the fixing component (40).

10. A seat belt buckle (10), **characterized by** comprising:
a locking tongue; and
the buckle assembly (100) according to any one of claims 1 to 9, wherein the locking tongue is engaged in the buckle (10) of the buckle assembly (100), to fix a seat belt to a seat.
